# EUROPÄISCHE PATENTSCHRIFT

(11) **EP 2 761 196 B1**
(45) Veröffentlichungstag und Bekanntmachung des Hinweises auf die Patenterteilung: **18.03.2015**
(21) Anmeldenummer: 12770071.4
(22) Anmeldetag: 27.09.2012
(51) Int. Cl.: F16C 17/04, F16C 19/30, F16C 21/00, F16C 19/38, B66C 23/84

(54) **DREHVERBINDUNG FÜR EINE ARBEITSMASCHINE**
ROTARY CONNECTION FOR A WORKING MACHINE
LIAISON TOURNANTE POUR ENGIN DE TRAVAIL

(30) Priorität: 30.09.2011 DE 102011083824
(43) Veröffentlichungstag der Anmeldung: 06.08.2014
(73) Patentinhaber: Terex Cranes Germany GmbH, 66482 Zweibrücken (DE)
(72) Erfinder: WECKBECKER, Alfons, 66482 Zweibrücken (DE); PEIN, Ralf, 66121 Saarbrücken (DE); NOLL, Volker, 66482 Zweibrücken (DE); SCHNITTKER, Frank, 97074 Würzburg (DE)
(74) Vertreter: Rau, Schneck & Hübner Patentanwälte Rechtsanwälte PartGmbB
(86) Internationale Anmeldenummer: PCT/EP2012/069030
(87) Internationale Veröffentlichungsnummer: WO 2013/045525

(56) Entgegenhaltungen:
- BE-A- 662 226
- DE-A1- 3 842 464
- DE-A1-102008 062 910
- DE-A1-102009 035 749
- DE-U1-202007 002 609
- US-A1- 2011 027 086

## Beschreibung

Die Erfindung betrifft eine Drehverbindung für eine Arbeitsmaschine, insbesondere für einen Kran.

Drehverbindungen für Arbeitsmaschinen wie beispielsweise Krane oder Bagger sind seit längerem beispielsweise aus der DE 39 42 847 A1 bekannt und werden zur drehbaren Verbindung beispielsweise eines Kran-Unterwagens mit einem Kran-Oberwagen verwendet. Derartige Drehverbindungen weisen zwei Lagerringe und dazwischen angeordnete Lagerkörper auf. Für eine Erhöhung der Tragfähigkeit der Drehverbindung sind in die Lagerringe Laufbahnen in Form gehärteter Laufdrähte eingesetzt. Aus Rothe Erde, Drahtwälzlager, Sonderdruck aus der technischen Rundschau BeruSchweiz, Nr. 18, 1957 sind Drahtwälzlager bekannt. Dort sind die Lagerkörper insbesondere als Kugeln ausgeführt, die auf Federstrahldrähten, die auf den Lagerringen aufgelegt sind, angeordnet sind. Derartige Drehverbindungen weisen eine hohe statische Tragzahl auf, die für eine Last in axialer Richtung einer Drehachse beispielsweise zwischen 25000 kN und 55000 kN und für eine Last in radialer Richtung der Drehachse mehr als 5000 kN betragen kann. Das bedeutet, dass die Hauptlast entlang der Drehachse orientiert ist. Die statische Tragzahl wird auch als Tragfähigkeit bezeichnet. Um eine derartig große Tragfähigkeit zu ermöglichen, sind große Lagerkörper und große Lagerringe erforderlich, um die zu ertragenden Lasten aufnehmen zu können. Der Durchmesser einer Laufbahn, entlang der die Lagerkörper angeordnet sind kann bis zu 5 m oder mehr betragen. Der Durchmesser eines einzelnen Lagerkörpers kann 50 mm und mehr betragen. Derartige Drehverbindungen weisen insbesondere eine große Bauhöhe auf, so dass die damit ausgerüsteten Arbeitsmaschinen einen hohen Platzbedarf erfordern. Als Baugröße versteht man die äußeren Maße der Drehverbindung, also der äußeren Durchmesser und die Bauhöhe. Eine großbauende Drehverbindung ist schwer und teuer. Die Herstellung und insbesondere die Montage von Drahtwälzlagern ist umständlich und kompliziert. Insbesondere müssen solche Lager spielfrei hergestellt werden. Die Einstellung und Kalibrierung derartiger Lager ist zeit- und kostenintensiv. Derartige Lager werden insbesondere für Präzisionslager eingesetzt. Der Einstellungs- und Justageaufwand ist groß.

Aus der US 2011/0 027 086 A1, der BE 662 226 A und der DE 10 2008 061 910 A1 sind Drehverbindungen bekannt, bei denen die Lagerkörper jeweils schräg zur Drehachse der Drehverbindung orientiert sind.

Weitere Drehverbindungen sind beispielsweise aus der DE 10 2009 035 749 A1, der DE 38 42 464 A1, der EP 1 239 171 A2, der GB 988,169, der DE 12 02 617 A, der DE 20 2007 002 609 U1 und der DE 12 01 128 A bekannt. Derartige Lager weisen insbesondere eine reduzierte statische Tragzahl auf. Für den Einsatz in Arbeitsmaschinen wie beispielsweise Kranen oder Baggern sind derartige Drehverbindungen nicht geeignet.

Es ist die Aufgabe der vorliegenden Erfindung, eine Drehverbindung für eine Arbeitsmaschine zu schaffen, so dass die Drehverbindung bei einer vorgegebenen Tragfähigkeit eine vergleichsweise reduzierte Baugröße und insbesondere eine reduzierte Bauhöhe aufweist.

Diese Aufgabe ist durch eine Drehverbindung mit den im Anspruch 1 angegebenen Merkmalen gelöst. Erfindungsgemäß wurde erkannt, anstelle einer Lagerkörper-Ringanordnung mit sehr großen Lagerkörpern mindestens zwei Lagerkörper-Ringanordnungen mit jeweils kleineren Lagerkörpern, also beispielsweise zylindrische Rollen mit reduzierter Rollen-Länge und reduziertem Rollen-Durchmesser, zu verwenden. Erfindungsgemäß wird also eine einreihige Anordnung von Lagerkörpern durch eine mehrreihige, insbesondere zweireihige, und gestufte Anordnung vergleichsweise kleinerer Lagerkörper ersetzt. Dadurch ist die anteilig pro Lagerkörper zu übertragende Kraft bzw. Last und insbesondere die in den Lagerringen auftretenden Spannungen reduziert. Dadurch ist es möglich, die Bauhöhe der Lagerringe, also der Drehverbindung insgesamt, zu reduzieren. Die in den Lagerringen auftretenden Spannungen sind direkt proportional zu der zu übertragenden Kraft und indirekt proportional zu einer von den Lagerkörpern überstrichenen Fläche. Die überstrichene Fläche entspricht einer Projektion der Lagerkörper auf eine Lauffläche, die jeweils an einem Lagerring angeordnet ist. Beispielsweise können Wälzkörpern wie zylindrischen Rollen als Lagerkörper verwendet werden. In diesem Fall ergibt sich die überstrichene Fläche als Produkt des Rollen-Durchmessers, der Rollen-Länge und der Anzahl der Rollen, die zwischen einem Innen-Lagerring und einem Außen-Lagerring in einer Lagerkörper-Ringanordnung angeordnet sind. Eine in den Lagerringen auftretende Schubspannung ist nicht konstant. Eine maximale Schubspannung tritt nicht an einer Lauffläche, an welcher die Lagerkörper den Lagerring berühren, sondern im Inneren des Lagerrings auf. Ein Abstand der maximalen Schubspannung von der Lauffläche ist direkt proportional zu der zu übertragenden Kraft und - im Fall zylindrischer Rollen als Lagerkörper - zu dem Rollen-Durchmesser. Der Abstand der maximalen Schubspannung von der Lauffläche in dem Lagerring ist durch die Verwendung kleinerer Lagerkörper reduziert. Der Lagerring kann eine reduzierte Höhe entlang der Drehachse, insbesondere im Bereich der Laufflächen, aufweisen. Die Beanspruchungen der Lagerringe durch Schubspannungen und Biegemomente sind abhängig von der zu übertragenden Last und den belasteten Querschnittflächen der Lagerringe. Die Schubspannungen und Biegemomente sind lokal unterschiedlich und insbesondere nicht konstant. Die Beanspruchungsverhältnisse an Innen-Lagerring und Außen-Lagerring sind aufgrund der Kraftwirkung komplementär. Eine gestufte Anordnung der Lagerkörper-Ringanordnungen ermöglicht daher eine besonders vorteilhafte platzsparende Ausführung der Lagerringe mit reduzierter Bauhöhe entlang der Drehachse. Es ist also möglich, mehrere Lagerkörper-Ringanordnungen zwischen dem Innen-Lagerring und dem Außen-Lagerring derart anzuordnen, dass mindestens zwei der Lagerkörper-Ringanordnungen entlang der Drehachse der Drehverbindung benachbart und beabstandet zueinander, also mehrreihig gestuft angeordnet sind. Die mindestens zwei Lagerkörper-Ringanordnungen legen jeweils eine Wirkrichtung fest, entlang der die Drehverbindung Kräfte aufnimmt. Insbesondere sind die Wirkrichtungen der mindestens zwei Lagerkörper-Ringanordnungen parallel zueinander orientiert. Entlang der Wirkrichtungen sind die mindestens zwei Lagerkörper-Ringanordnungen beabstandet zueinander angeordnet. Insbesondere sind die mindestens zwei Lagerkörper-Ringanordnungen in einer Richtung senkrecht zur Wirkrichtung mehrreihig gestuft angeordnet. Die Wirkrichtung ist durch eine Lagerkörper-Rotationsachse festgelegt. Die Wirkrichtung ist senkrecht zur von den Lagerkörper-Rotationsachsen festgelegten Mittenfläche orientiert. Das bedeutet, dass die Mittenflächen der Lagerkörper-Ringanordnungen gestuft zueinander angeordnet sind.

Insbesondere ist zwischen den benachbarten Lagerkörper-Ringanordnungen, die zur Aufnahme von parallel zur Drehachse gerichteten, also axialen Kräften dienen, keine weitere Lagerkörper-Ringanordnung vorgesehen, die zur Aufnahme von radial zur Drehachse gerichteten Kräften dient. Die beiden benachbarten Lagerkörper-Ringanordnungen dienen zur Aufnahme gleichartig gerichteter, parallel orientierter Kräfte, also beispielsweise zur Aufnahme von Zugkräften oder von Druckkräften. Diese mindestens zwei Lagerkörper-Ringanordnungen ersetzen eine aus dem Stand der Technik bekannte Lagerkörper-Ringanordnung und führen zu einer Reduktion der Höhe der Lagerringe aufgrund reduzierter auftretender Beanspruchungen. Es ist möglich, dass nur eine oder mehrere derartige gestufte Anordnungen von Lagerkörper-Ringanordnungen an der Drehverbindung vorgesehen sind. Die Lagerkörper-Ringanordnungen weisen jeweils eine Mittenfläche auf, die insbesondere parallel zueinander orientiert sind. Die Mittenfläche ist durch die Anordnung der Lagerkörper-Rotationsachsen definiert. Dadurch, dass die Mittenflächen der gestuft angeordneten Lagerkörper-Ringanordnungen parallel zu einander orientiert sein kann, ermöglichen diese eine gleichartige Kraftübertragung zwischen den Lagerringen. Eine derartige Drehverbindung weist ein reduziertes Gewicht auf und ist insbesondere wegen des reduzierten Materialaufwands kostengünstig herstellbar. Insgesamt sind mindestens drei Lagerkörper-Ringanordnungen vorgesehen. Neben der Bauhöhenreduktion infolge der gestuften Anordnung der Lagerkörper-Ringanordnungen ergibt sich zusätzlich eine Reduzierung der Bauhöhe der erfindungsgemäßen Drehverbindung aus der Verwendung kleinerer Lagerkörper wie beispielsweise Wälzkörper mit reduziertem Rollen-Durchmesser. Dadurch kann die Bauhöhe der Drehverbindung zusätzlich reduziert werden. Eine derartige Drehverbindung kann Zug- und Druckkräfte entlang der Drehachse, senkrecht bzw. radial zur Drehachse orientierte Querkräfte und senkrecht zur Drehachse orientierte Momente übertragen. Derartige Drehverbindungen werden insbesondere in Arbeitsmaschinen eingesetzt, da aufgrund der zu transportierenden Lasten eine hohe Tragfähigkeit erforderlich ist. Dies ist beispielsweise bei Kranen und Baggern der Fall. Derartige Drehverbindungen werden auch als Rollendrehverbindung bezeichnet. Es ist aber auch möglich, derartige Drehverbindungen bei Windrädern oder anderen Arbeitsmaschinen einzusetzen, bei welchen große Kräfte auf die Drehverbindung wirken.

Eine Drehverbindung nach Anspruch 2 ermöglicht eine Gestaltungsvielfalt bei der Auslegung der Drehverbindung. Insbesondere ist es möglich, dass die gestufte Anordnung der benachbarten Lagerkörper-Ringanordnungen zur Aufnahme von Zugkräften oder von Druckkräften eingesetzt wird. Die gestufte Anordnung der benachbarten Lagerkörper-Ringanordnungen kann entlang der Drehachse oberhalb oder unterhalb der Radial-Lagerkörper-Ringanordnung vorgesehen sein.

Eine Drehverbindung nach Anspruch 3 ermöglicht eine zusätzliche Reduzierting der Bauhöhe der Drehverbindung. Sowohl zur Aufnahme von Zugkräften als auch zur Aufnahme Druckkräften sind jeweils zweireihig gestufte Lagerkörper-Ringanordnungen vorgesehen. Insbesondere ist es möglich, eine fünfte Lagerkörper-Ringanordnung vorzusehen, die insbesondere als Radial-Lagerkörper-Ringanordnung ausgeführt ist.

Eine Drehverbindung nach Anspruch 4 weist eine erhöhte Tragfähigkeit auf und ermöglicht insbesondere die verbesserte Übertragung von Zug- und Druckkräften, von Querkräften und von Momenten quer zur Drehachse. Die Verwendung von jeweils zwei Lagerkörper-Ringanordnungen zwischen einer Innen-Lagerring-Lauffläche und einer Außen-Lagerring-Lauffläche ermöglicht eine besonders effektive, weil platz-, material- und kostensparende, Ausführung der Drehverbindung. Derart gestuft ausgeführte Lagerringe sind besonders robust und daher mechanisch beanspruchbar.

Eine Drehverbindung nach Anspruch 5 ermöglicht eine kompakte Anordnung der Lagerkörper-Ringanordnungen zwischen den Lagerringen.

Eine Drehverbindung nach Anspruch 6 vereinfacht die Montage der Lagerringe zu der Drehverbindung. Je nach Anbindung der Drehverbindung an die Arbeitsmaschine kann entweder der Innen-Lagerring oder der Außen-Lagerring geteilt ausgeführt sein.

Eine Drehverbindung nach Anspruch 7 ermöglicht eine weitere Reduziening der Baugröße der Drehverbindung. Aufgrund der Ausführung eines der Lagerringe, insbesondere des Außen-Lagerrings, mit einem inneren Stufenabschnitt und einem äußeren Stufenabschnitt, der gegenüber dem inneren Stufenabschnitt eine erhöhte Länge entlang der Drehachse aufweist, sind die Laufflächen in der Zugrichtung und in der Druckrichtung jeweils zueinander gestuft angeordnet. Zudem sind die Laufflächen, insbesondere bezüglich einer Trennfläche des jeweils anderen Lagerrings, insbesondere des Innen-Lagerrings, symmetrisch angeordnet. Dadurch ist es möglich, dass die gestufte Ausfühning insbesondere des Außen-Lagerrings sowohl an den Zug-Laufflächen als auch an den Druck-Laufflächen eine weitere Reduzierung der Baugröße der Drehverbindung ermöglicht. Es ist insbesondere nicht erforderlich, eine beispielsweise an der Zug-Lauffläche reduzierte Länge des Außen-Lagerrings durch eine erhöhte Länge des Innen-Lagerrings zu kompensieren, da die stufenförmige Ausbildung des Außen-Lagerrings aufgrund des Kraftflusses eine Kompensation der aufzunehmenden Kräfte bewirkt. Eine derartige Drehverbindung weist eine beanspruchungsoptimierte Konstruktion auf.

Eine Drehverbindung nach Anspruch 8 ermöglicht eine effektive Aufnahme von Zug- und Druckkräften entlang der Drehachse.

Eine Drehverbindung nach Anspruch 9 ermöglicht eine besonders leichtgängige Drehbewegung der Lagerringe zueinander. Die dafür benötigten Wälzkörper sind nahezu unbegrenzt verfügbar und ermöglichen eine kostenreduzierte Herstellung der Drehverbindung. Insbesondere sind die Lagerkörper im Wesentlichen zylinderförmig ausgeführt, insbesondere in Form einer zylindrischen Rolle, einer Kegelrolle, einer Nadel oder einer Tonne. Daraus resultiert eine, insbesondere gegenüber einer Kugel, vergrößerte Lauffläche. Insbesondere ist es damit möglich, die Belastbarkeit der Lagerkörper und damit der Drehverbindung insgesamt zu erhöhen. Insbesondere kann auf die Verwendung von Lagerdrähten für die aufwändig herzustellenden Drahtwälzlager verzichtet werden.

Eine Drehverbindung nach Anspruch 10 ermöglicht ein gutes Gleitverhalten der Drehverbindung. Die Bauhöhe ist zusätzlich reduziert.

Eine Drehverbindung nach Anspruch 11 ist unkompliziert aufgebaut. Dadurch, dass Laufflächen für die Lagerkörper einstückig an den Lagerringen ausgebildet sind, ist es insbesondere nicht erforderlich, zusätzliche Komponenten wie beispielsweise gehärtete Lagerdrähte an den Lagerringen anzuordnen oder insbesondere in den Lagerring zu integrieren. Die Laufflächen sind insbesondere integrierter Bestandteil der Lagerringe. Die Laufflächen kennzeichnen den Abschnitt des Lagerrings, in dem die Lagerkörper an dem Lagerring angeordnet sind.

Eine Drehverbindung nach Anspruch 12 ermöglicht einen unkomplizierte Aufbau der Drehverbindung. Insbesondere ist es nicht erforderlich, zusätzliche Elemente zwischen Lagerkörpern und Laufflächen der Lagerringe anzuordnen. Die Lagerkörper sind direkt auf einer korrespondierenden Lauffläche der Lagerringe angeordnet. Der Aufwand für das Einstellen und Ausrichten einer derartigen Drehverbindung ist reduziert.

Ausführungsbeispiele der Erfindung werden nachfolgend anhand der Zeichnung näher erläutert. In dieser zeigen:
- Fig. 1: eine schematische Darstellung einer Arbeitsmaschine mit einer erfindungsgemäßen Drehverbindung,
- Fig. 2: vergrößerter Längsschnitt einer Drehverbindung gemäß einem ersten Ausführungsbeispiel,
- Fig. 3: eine Fig. 2 entsprechende Darstellung einer nicht erfindungsgemäßen Drehverbindung, und
- Fig. 4 und 5: Fig. 2 entsprechende Darstellungen einer Drehverbindung gemäß weiteren Ausführungsbeispielen.

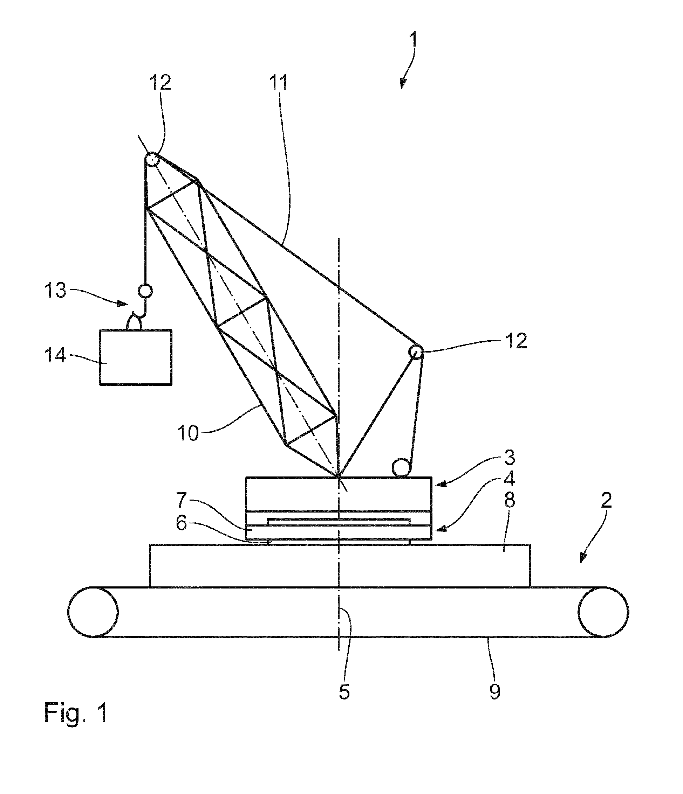

Eine in Fig. 1 schematisch dargestellte Arbeitsmaschine ist ein Kran 1, der einen Unterwagen 2 und einen Oberwagen 3 umfasst. Der Unterwagen 2 und der Oberwagen 3 sind durch eine Drehverbindung 4 bezüglich einer Drehachse 5 drehbar miteinander verbunden. Die Drehachse 5 ist vertikal orientiert. Das bedeutet, dass die Drehachse 5 senkrecht zu einem Boden, auf dem der Kran 1 angeordnet ist, orientiert ist. Die Drehverbindung 4 weist einen Innen-Lagerring 6 und einen Außen-Lagerring 7 auf. Der Innen-Lagerring 6 ist mit einem Mittelteil 8 des Unterwagens 2 verbunden. Das Mittelteil 8 ist über ein Raupenfahrwerk 9 auf dem Boden abgestützt. Es ist auch möglich, anstelle des Raupenfahrwerks 9 mehrere Reifen oder nicht verfahrbare Stützen an dem Mittelteil 8 anzuordnen. Der Oberwagen 3 ist mit dem Außen-Lagerring 7 der Drehverbindung 4 verbunden. Es ist auch möglich, dass der Außen-Lagerring 7 mit dem Unterwagen 2 und der Innen-Lagerring 6 mit dem Oberwagen 3 verbunden sind. Der Oberwagen 3 weist einen Mast in Form eines Gittermasts 10 auf. Der Mast kann auch als Teleskop-Mast ausgeführt sein. Weiterhin ist ein Lastseil 11 vorgesehen, das über Umlenkrollen 12 geführt ist. An einem freien Ende des Lastseils 11 ist ein Lasthaken 13 zum Aufnehmen einer Last 14 vorgesehen.

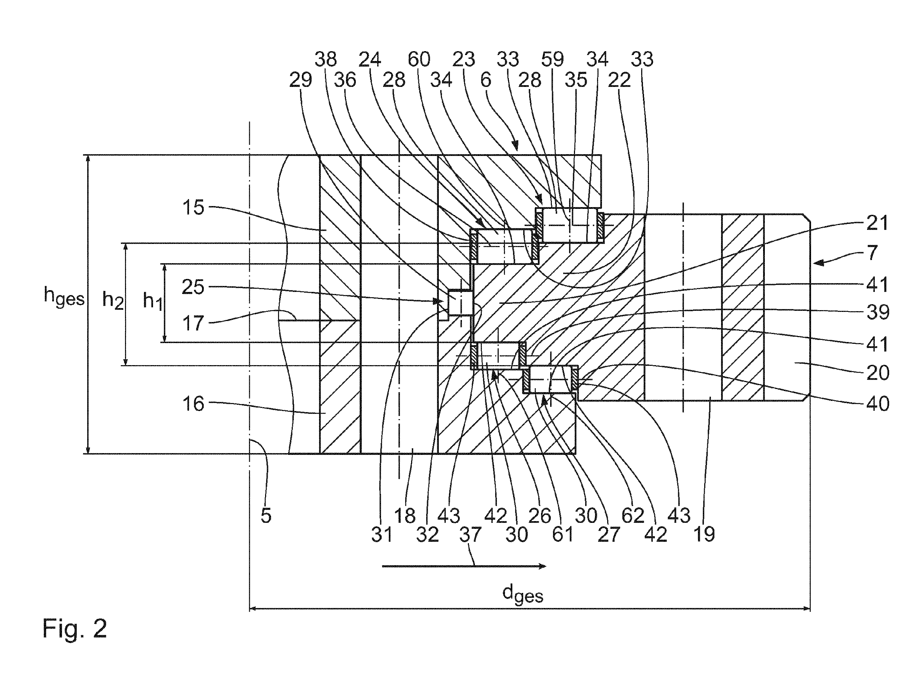

Im Folgenden wird anhand von Fig. 2 eine erfindungsgemäße Drehverbindung 4 gemäß einem ersten Ausführungsbeispiel näher erläutert. Die Drehverbindung 4 umfasst einen Innen-Lagerring 6 und einen Außen-Lagerring 7, die bezüglich der Drehachse 5 konzentrisch angeordnet sind. Der Innen-Lagerring 6 ist zweiteilig ausgeführt mit einem Innen-Lagerring-Oberteil 15 und einen Innen-Lagerring-Unterteil 16, die durch eine Trennfläche 17 voneinander getrennt sind. Dadurch, dass der Innen-Lagerring 6 quer, insbesondere senkrecht zur Drehachse 5 geteilt ist, kann die Geometrie des Innen-Lagerrings 6 an die zu erwartenden Beanspruchungen angepasst werden. Insbesondere ist es möglich, die gestufte Anordnung des Innen-Lagerrings 6 und dessen Höhe entlang der Drehachse 5 beanspruchungsgerecht auszulegen. Insbesondere können Breite und Höhe der Stufen derart ausgelegt werden, dass eine maximal zu erwartende Schubspannung von dem Innen-Lagerring 6 ertragen wird und insbesondere nicht zu eine Beschädigung desselben führt. Der Innen-Lagerring 6 kann auch einteilig aufgeführt sein. Die Trennfläche 17 verläuft im Wesentlichen senkrecht zur Drehachse 5, wobei die Trennfläche 17 eine oder mehrere Stufen aufweisen kann, um das Innen-Lagerring-Oberteil 15 und das Innen-Lagerring-Unterteil 16 bezüglich der Drehachse 5 zueinander auszurichten. Es ist auch möglich, dass die Trennfläche 17 quer zur Drehachse 5 orientiert ist.

Das Innen-Lagerring-Oberteil 15 und das Innen-Lagerring-Unterteil 16 weisen mehrere, jeweils paarweise zueinander fluchtende Durchgangsöffnungen 18 auf, die zum Durchstecken nicht dargestellter Verbindungselemente wie beispielsweise Schrauben oder Bolzen dienen. Mittels der Verbindungselemente ist der Innen-Lagerring 6 an dem Unterwagen 2 befestigt.

Der Außen-Lagerring 7 weist eine parallel zur Drehachse 5 orientierte Durchgangsöffnung 19 auf, die zur Befestigung am Oberwagen 3 dient. Weiterhin weist der Außen-Lagerring 7 eine Außenverzahnung 20 auf, über die der Außen-Lagerring 7 bezüglich der Drehachse 5 mittels eines nicht dargestellten Antriebs drehantreibbar ist. Der Außen-Lagerring 7 weist einen der Drehachse 5 zugewandten inneren Stufenabschnitt 21 mit einer ersten Höhe h₁ entlang der Drehachse 5 und einen äußeren Stufenabschnitt 22 mit einer zweiten Höhe h₂ entlang der Drehachse 5 auf. Die erste Höhe h₁ ist kleiner als die zweite Höhe h₂. Der Innen-Lagerring 6 umgreift den Außen-Lagerring 7 zumindest im Bereich der Stufenabschnitte 21, 22. Es ist auch möglich, den Innen-Lagerring 6 derart zu gestalten, dass weitere Bereiche des Außen-Lagerrings 7 umgeben sind.

Zwischen dem Innen-Lagerring 6 und dem Außen-Lagerring 7 sind insgesamt fünf Lagerkörper-Ringanordnungen 23 bis 27 mit jeweils mehreren, identischen Lagerkörpern 28 bis 30 vorgesehen. Die Drehverbindung ist fünfreihig ausgeführt. Zwischen einem ersten, oberen Paar benachbarter und entlang der Drehachse 5 beabstandet angeordneter Lagerkörper-Ringanordnungen 23, 24 und einem zweiten, unteren Paar benachbarter und entlang der Drehachse 5 beabstandet angeordneter Lagerkörper-Ringanordnungen 26, 27 ist die Lagerkörper-Ringanordnung 25 vorgesehen. Zwischen den jeweils benachbart angeordneten Lagerkörper-Ringanordnungen 23, 24 und 26, 27 eines Paares ist keine weitere Lagerkörper-Ringanordnung vorgesehen.

Die Lagerkörper-Ringanordnung 25 ist als Radial-Lagerkörper-Ringanordnung ausgeführt und zwischen einer Innen-Lagerring-Radial-Lauffläche 31 des Innen-Lagerrings 6 und einer Außen-Lagerring-Radial-Lauffläche 32 des Außen-Lagerrings 7 angeordnet. Die Radial-Laufflächen 31, 32 sind jeweils als Zylinder-Mantelflächen ausgeführt und konzentrisch zur Drehachse 5 angeordnet. Die Radial-Lagerkörper-Ringanordnung 25 dient zur Aufnahme von radial zur Drehachse 5 gerichteten Kräften. Die Lagerkörper 29 sind als zylindrische Rollen ausgeführt. Die Lagerkörper 29 können auch als Kugeln oder in Form anderer Lagerkörper ausgeführt sein. Die Mittenfläche der Lagerkörper-Ringanordnung 25 ist als konzentrisch zur Drehachse 5 orientierte Zylindermantelfläche ausgeführt.

Die Lagerkörper-Ringanordnungen 23, 24 sind jeweils zwischen einer Innen-Lagerring-Zug-Lauffläche 33 des Innen-Lagerrings 6 und jeweils einer Außen-Lagerring-Zug-Lauffläche 34 des Außen-Lagerrings 7 angeordnet. Die Innen-Lagerring-Zug-Lauffläche 33 ist integraler Bestandteil des Innen-Lagerrings 6. Die Außen-Lagerring-Zug-Lauffläche 34 ist integraler Bestandteil des Außen-Lagerrings 7. Insbesondere sind die Laufflächen 33, 34 jeweils einstückig mit dem entsprechenden Lagerring 6 bzw. 7 ausgeführt. Als Lauffläche 33, 34 ist jeweils der Bereich oder Abschnitt des zugehörigen Lagerrings 6 bzw. 7 bezeichnet, auf dem die Lagerkörper-Ringanordnungen 23, 24 verlagert werden, insbesondere abgerollt werden. Die Lagerkörper 28 der Lagerkörper-Ringanordnungen 23, 24 sind direkt auf der jeweils korrespondierenden Lauffläche 33, 34 angeordnet. Insbesondere sind keine weiteren, zwischen dem Lagerkörper 28 und der entsprechenden Lauffläche 33, 34 angeordneten Zwischenelemente wie Laufdrähte erforderlich.

Die Lagerkörper 28 der Zug-Lagerkörper-Ringanordnungen 23, 24 sind identisch ausgeführt und dienen zur Aufnahme von parallel zur Drehachse 5, also axial gerichteten Kräften. Die Zug-Lagerkörper-Ringanordnungen 23, 24 sind Axiallageningen. Die Zug-Lagerkörper-Ringanordnungen 23, 24 weisen jeweils eine Mittenfläche auf, wobei die Mittenflächen parallel zueinander orientiert sind. Die Mittenflächen werden durch die Lagerkörper-Rotationsachsen 35, 36 der Lagerkörper 28 festgelegt. Die Lagerkörper 28 sind als zylindrische Rollen ausgeführt. Entsprechend sind die Mittenflächen als konzentrisch zur Drehachse 5 angeordnete Ringflächen ausgeführt und jeweils senkrecht zur Drehachse 5 orientiert.

Die Lagerkörper-Ringanordnungen 23, 24 weisen jeweils eine Wirkrichtung 59 bzw. 60 auf. Die Lagerkörper-Ringanordnungen 23, 24 sind zur Aufnahme von Kräften entlang der jeweiligen Wirkrichtung 59, 60 geeignet. Die Wirkrichtungen 59, 60 sind senkrecht zu der jeweiligen Mittenfläche der Lagerkörper-Ringanordnungen 23, 24 orientiert. Die Wirkrichtungen 59, 60 sind zueinander parallel. Die Wirkrichtungen 59, 60 sind parallel zur Drehachse 5 orientiert. Entlang der Wirkrichtungen 59, 60 sind die beiden benachbart zueinander angeordneten Lagerkörper-Ringanordnungen 23, 24 beabstandet zueinander angeordnet. In einer Richtung senkrecht zu den Wirkrichtungen 59, 60 sind die beiden benachbart angeordneten Lagerkörper-Ringanordnungen 23, 24 mehrreihig gestuft angeordnet.

Die Zug-Lagerkörper-Ringanordnung 23 ist an dem äußeren Stufenabschnitt 22 und die Zug-Lagerkörper-Ringanordnung 24 ist am inneren Stufenabschnitt 21 des Außen-Lagerrings 7 angeordnet. Die Zug-Lagerkörper-Ringanordnungen 23, 24 sind entlang der Drehachse 5 beabstandet zueinander angeordnet. Die Zug-Lagerkörper-Ringanordnungen 23, 24 sind in einer bezüglich der Drehachse 5 radialen Richtung 37 beabstandet zueinander angeordnet.

Die Lagerkörper 28 der Zug-Lagerkörper-Ringanordnungen 23, 24 weisen jeweils eine Lagerkörper-Länge entlang der radialen Richtung 37 und einen Lagerkörper-Durchmesser bezogen auf die Lagerkörper-Rotationsachse 35 bzw. 36 auf. Eine die Drehverbindung 4 charakterisierende Tragfähigkeit, d. h. eine von der Drehverbindung 4 übertragbare Last ist direkt proportional zu der Anzahl der Lagerkörper einer Lagerkörper-Ringanordnung, der Lagerkörper-Länge und dem Lagerkörper-Durchmesser.

Die in Fig. 2 schraffiert dargestellte Fläche des Außen-Lagerrings 7, die einen Längsschnitt durch die Drehachse 5 darstellt, und insbesondere die Höhe des Außen-Lagerrings 7 entlang der Drehachse 5, nimmt entlang der radialen Richtung 37, also mit zunehmendem radialen Abstand von den Laufflächen 34, 42 zu, da die Schubspannungen in dem Außen-Lagerring 7 im Bereich der Durchgangsöffnung 19 wegen der Befestigung am Oberwagen 3 größer sind als im Bereich der Laufflächen 34, 42. Dies gilt analog für den Innen-Lagerring 6. Sowohl die Bauhöhe des Innen-Lagerring-Oberteils 15 als auch die des Innen-Lagerring-Unterteils 16 nehmen mit zunehmendem radialen Abstand von den Laufflächen 33, 41, also entgegen der radialen Richtung 37, zu, da die Schubspannungen in dem Innen-Lagerring 6 im Bereich der Durchgangsöffnung 18 wegen der Befestigung am Unterwagen 2 größer sind als im Bereich der Laufflächen 33, 41.

Die Lagerkörper 28 der Zug-Lagerkörper-Ringanordnungen 23, 24 sind jeweils mittels eines Käfigs 38 miteinander verbunden. Der Käfig 38 erhöht die Stabilität der Anordnung der Lagerkörper 28 zueinander. Analog zu den Zug-Lagerkörper-Ringanordnungen 23, 24 sind an dem inneren Stufenabschnitt 21 eine Druck-Lagerkörper-Ringanordnung 26 und an dem äußeren Stufenabschnitt 22 eine weitere Druck-Lagerkörper-Ringanordnung 27 vorgesehen. Die Lagerkörper 30 der Druck-Lagerkörper-Ringanordnungen 26, 27 sind als Zylinderrollen ausgeführt. Im Vergleich zu den Lagerkörpern 28 der Zug-Lagerkörper-Ringanordnungen 23, 24 weisen die Lagerkörper 30 eine reduzierte Größe, d. h. eine reduzierte Lagerkörper-Länge entlang der radialen Richtung 34 und einen reduzierten Lagerkörper-Durchmesser bezüglich einer jeweiligen Lagerkörper-Rotationsachse 39, 40 auf. Die Lagerkörper 28, 30 können auch identisch ausgeführt sein, um die Anzahl verschiedener Bauteile bei der Herstellung der Drehverbindung 4 zu reduzieren. Entsprechend weisen die Lagerkörper-Ringanordnungen 26, 27 jeweils eine Wirkrichtung 61 bzw. 62 auf. Die Wirkrichtungen 61, 62 sind jeweils senkrecht zu einer Mittenfläche der Lagerkörper-Ringanordnungen 26, 27 orientiert. Die Wirkrichtungen 61, 62 sind parallel zueinander orientiert. Entlang der Wirkrichtungen 61, 62 sind die Lagerkörper-Ringanordnungen 26, 27 beabstandet zueinander angeordnet. Die benachbart zueinander angeordneten Lagerkörper-Ringanordnungen 26, 27 sind in einer Richtung senkrecht zu den Wirkrichtungen 61, 62 gestuft angeordnet. Die Wirkrichtungen 61, 62 sind parallel zur Drehachse 5 orientiert.

Die Wirkrichtungen 59 bis 62 sind parallel zueinander und insbesondere zur Drehachse 5 orientiert.

Die Dnick-Lagerkörper-Ringanordnungen 26, 27 sind jeweils zwischen einer Innen-Lagerring-Druck-Lauffläche 41 und einer dazu korrespondierenden Außen-Lagerring-Druck-Lauffläche 42 angeordnet. Die Lagerkörper 30 der Dnick-Lagerkörper-Ringanordnungen 26, 27 sind jeweils mittels eines Käfigs 43 miteinander verbunden. Die Druck-Lagerkörper-Ringanordnungen 26, 27 sind entlang der Drehachse 5 beabstandet zueinander und entlang der radialen Richtung 37 beabstandet zueinander angeordnet.

Die Lagerkörper 28 und 30 sind an dem Außen-Lagerring 7 an den gegenüberliegenden, von einander abgewandten Außen-Lagerring-Zug-Lauffläche 34 und Außen-Lagerring-Druck-Lauffläche 42 angeordnet.

Aufgrund der jeweils versetzten und gestuften Anordnung der Lagerkörper-Ringanordnungen 23, 24 bzw. 26, 27 kann eine Gesamthöhe h_{ges} der Drehverbindung 4 um mehr als 20 % reduziert werden, wobei die Tragfähigkeit der Drehverbindung mit der einer konventionellen Drehverbindung, die jeweils genau eine Zug-Lagerkörper-Ringanordnung und genau eine Druck-Lagerkörper-Ringanordnung aufweist, identisch ist. Dadurch, dass die Zug-Lagerkörper-Ringanordnungen 23, 24 bzw. die Druck-Lagerkörper-Ringanordnung 26, 27 jeweils versetzt zueinander zwischen dem Innen-Lagering 6 und dem Außen-Lagerring 7 angeordnet sind, entspricht eine Gesamtlänge der beiden benachbarten Lagerkörper-Ringanordnungen 23, 24 bzw. 26, 27 einer Länge eines großen, ursprünglich verwendeten Lagerkörpers. Ein Gesamtdurchmesser d_{ges} ist gegenüber einer konventionellen Drehverbindung im Wesentlichen unverändert. Eine Höhe des Außen-Lagerrings 7 kann aufgrund der reduzierten maximalen Schubspannung um mehr als 16 % reduziert werden. Die Drehverbindung 4 weist eine reduzierte Baugröße und ein reduziertes Gewicht auf. Die Drehverbindung 4 ist insbesondere mit den heute bekannten Fertigungsverfahren unkompliziert herstellbar.

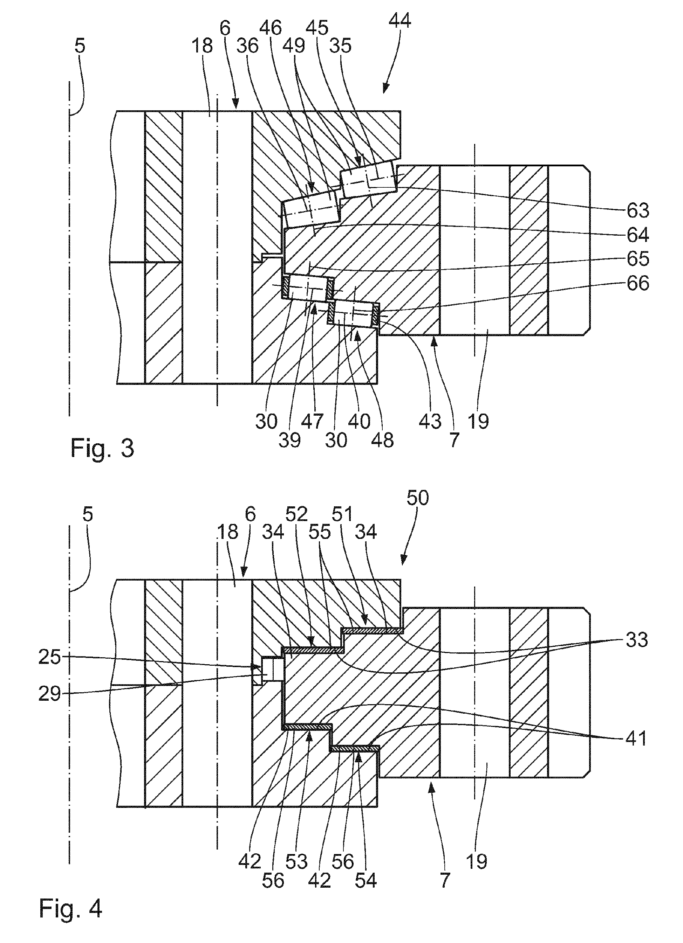

Im Folgenden wird anhand der Fig. 3 eine weitere Ausführungsform einer Drehverbindung 44 erläutert. Komponenten, die denjenigen entsprechend die vorstehend in Bezugnahme auf die Figuren 1 und 2 bereits erläutert wurden, tragen die gleichen Bezugsziffern und werden nicht noch mal im Einzelnen diskutiert.

Wesentlicher Unterschied der Drehverbindung 44 gemäß dem zweiten Ausfühningsbeispiel ist die Anordnung und Ausbildung der Zug-Lagerkörper-Ringanordnungen 45, 46 und der Druck-Lagerkörper-Ringanordnungen 47 und 48. Die Zug-Lagerkörper-Ringanordnungen 45, 46 weisen jeweils Lagerkörper 49 in Form von Kegelrollen auf. Die von den Lagerkörper-Rotationsachsen 35, 36 definierten Mittenflächen der Zug-Lagerkörper-Ringanordnungen 45, 46 sind als Kegelflächen bezüglich der Drehachse 5 ausgeführt. Dadurch, dass die Mittenfläche der Zug-Lagerkörper-Ringanordnungen 45, 46 gegenüber der Drehachse 5 geneigt, also quer bezüglich der Drehachse 5 angeordnet sind, sind die Zug-Lagerkörper-Ringanordnungen 45, 46 geeignet, zumindest teilweise radial bezüglich der Drehachse 5 orientierte Kräfte aufzunehmen. Entsprechend ist es nicht erforderlich, eine Radial-Lagerkörper-Ringanordnung gemäß dem ersten Ausführungsbeispiel vorzusehen.

Die Zug-Lagerkörper-Ringanordnungen 45, 46 sind ohne Käfig ausgeführt. Es ist auch möglich, für die Ringanordnungen 45, 46 zur Stabilisierung der Lagerkörper 49 einen Käfig vorzusehen.

Die Dnick-Lagerkörper-Ringanordnungen 47, 48 weisen zylindrische Rollen 30 als Lagerkörper auf, die durch einen Käfig 43 miteinander verbunden sind. Entgegen dem ersten Ausführungsbeispiel sind die Druck-Lagerkörper-Ringanordnungen 47, 48 derart gegenüber der Drehachse 5 geneigt angeordnet, dass die von den Lagerkörper-Rotationsachsen 39, 40 gebildeten Mittenflächen als Kegelmantelflächen ausgeführt sind. Die Mittenflächen der Dnick-Lager-Ringanordnungen 47, 48 sind parallel und entlang der Drehachse 5 beabstandet zueinander angeordnet. Die Druck-Lagerkörper-Ringanordnungen 47, 48 sind aufgrund ihrer schrägen Anordnung bezüglich der Drehachse 5 geeignet, zumindest teilweise Kräfte in der radialen Richtung 37 aufzunehmen.

Die Lagerkörper-Ringanordnungen 45, 46 weisen entsprechend deren Mittenflächen geneigte Wirkrichtungen 63 bzw. 64 auf. Die Lagerkörper-Ringanordnungen 47, 48 weisen entsprechend geneigte Wirkrichtungen 65 bzw. 66 auf. Die Wirkrichtungen 63, 64 sind zueinander parallel. Die Wirkrichtungen 65, 66 sind zueinander parallel. Die Wirkrichtungspaare 63, 64 und 65, 66 sind zueinander nicht parallel und insbesondere gegenüber der Drehachse 5 geneigt. Ein Neigungswinkel der Wirkrichtungen 63, 64 mit der Drehachse 5 bzw. der Wirkrichtungen 65, 66 mit der Drehachse 5 ist betragsmäßig im Wesentlichen identisch, weist jedoch verschiedene Vorzeichen auf. Beispielsweise kann ein Neigungswinkel zwischen den Wirkrichtungen 63, 64 und der Drehachse 5 etwa + 5 ° und ein Neigungswinkel zwischen den Wirkrichtungen 65, 66 und der Drehachse 5 etwa - 5 ° betragen. Es ist auch möglich, dass die beiden Neigungswinkel betragsmäßig unterschiedlich sind. In einer Richtung senkrecht zu den Wirkrichtungen 63, 64 bzw. 65, 66 sind die jeweils benachbart zueinander angeordneten Lagerkörper-Ringanordnungen 45, 46 bzw. 47, 48 gestuft angeordnet. Entlang ihrer Wirkrichtungen 63, 64 sind die Lagerkörper-Ringanordnungen 45, 46 beabstandet zueinander angeordnet. Dies gilt gleichermaßen für die Lagerkörper-Ringanordnungen 47, 48 entlang der Wirkrichtungen 65, 66.

Anhand der Fig. 4 wird nachfolgend ein drittes Ausfühningsbeispiel einer Drehverbindung 50 erläutert. Komponenten, die denjenigen entsprechend die vorstehend in Bezugnahme auf die Figuren 1 bis 3 bereits erläutert wurden, tragen die gleichen Bezugsziffern und werden nicht noch mal im Einzelnen diskutiert.

Bei der Drehverbindung 50 sind Zug-Lagerkörper-Ringanordnungen 51, 52 und die Dnick-Lagerkörper-Ringanordnungen 53, 54 mit Gleitkörpern 55 und 56 als Lagerkörper ausgeführt. Die Gleitkörper 55 der Zug-Lagerkörper-Ringanordnungen 51, 52 sind in Form von Ring-Scheibe mit unterschiedlichen Innen- und Außen-Durchmessern ausgeführt. Die Ringscheiben 55 weisen jeweils eine identische Länge bezüglich der radialen Richtung 37 auf. Es ist möglich, die Ringscheiben 55 bzw. 56 beispielsweise aus einer einzigen Ringscheibe herzustellen, so dass beispielsweise der Außen-Durchmesser der innen angeordneten Ringscheibe 55 dem Innen-Durchmesser der außen angeordneten Ringscheibe entspricht.

Analog sind die Gleitkörper 56 als Ringscheiben mit identischen Längen bezüglich der Radialrichtung 37 ausgeführt. Die Gleitkörper 55, 56 sind beispielsweise aus Messing oder einem anderen Werkstoff mit guten Gleiteigenschaften hergestellt. Die Zug-Lagerkörper-Ringanordnungen 51, 52 und die Dnick-Lagerkörper-Ringanordnungen 53, 54 sind jeweils senkrecht zur Drehachse 5 orientiert. Entsprechend ist eine Radial-Lagerkörper-Ringanordnung 25 zur Aufnahme von entlang der radialen Richtung 37 orientierten Kräften vorgesehen.

Die Gleitkörper 55, 56 weisen bezüglich der Lagerkörper 28, 30 gemäß dem ersten Ausfühningsbeispiel eine reduzierte Höhe entlang der Drehachse 5 auf. Die Drehverbindung 50 gemäß dem dritten Ausfühningsbeispiel ermöglicht eine weitere Reduzierung der Baugröße. Die Gleitkörper 55, 56 sind zwischen dem Innen-Lagerring 6 und dem Außen-Lagerring 7 als separate Bauteile vorgesehen. Alternativ ist es möglich, die Innen-Lagerring-Zug-Lauffläche 33, die Außen-Lagerring-Zug-Lauffläche 34, die Innen-Lagerring-Druck-Lauffläche 41 und die Außen-Lagerring-Druck-Lauffläche 42 mit einem Gleitmaterial derart zu beschichten, dass die Laufflächen 33, 34, 41, 42 als Gleitbahnen dienen. Dadurch wird die Teileanzahl der Drehverbindung 50 weiter reduziert. Insbesondere kann auch die Baugröße bei einer Beschichtung der Laufflächen 33, 34, 41, 42 zusätzlich reduziert werden.

Aufgrund der Anordnung der Lagerkörper-Ringanordnungen 51, 52, 53, 54 analog der Anordnung der Lagerkörper-Ringanordnungen 23, 24, 26, 27 gemäß dem ersten Ausführungsbeispiel in Fig. 2 weisen die Lagerkörper-Ringanordnungen 51 bis 54 identische Wirkrichtungen auf.

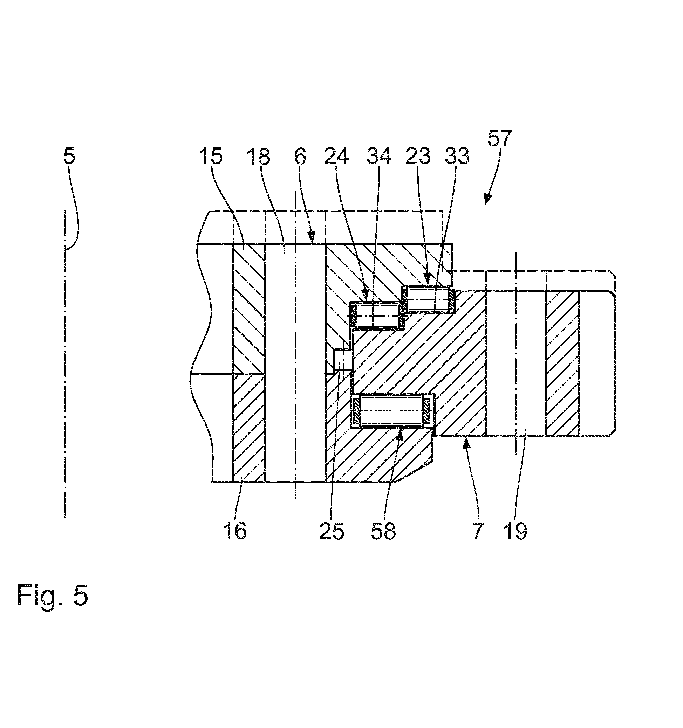

Im Folgenden wird anhand der Fig. 5 eine weitere Ausfühningsform einer Drehverbindung 57 erläutert. Komponenten, die denjenigen entsprechend die vorstehend in Bezugnahme auf die Figuren 1 bis 4 bereits erläutert wurden, tragen die gleichen Bezugsziffern und werden nicht noch mal im Einzelnen diskutiert.

Im Gegensatz zu der Drehverbindung 4 gemäß dem ersten Ausfühningsbeispiel weist die Drehverbindung 57 gemäß dem vierten Ausfühningsbeispiel genau eine gestufte Anordnung von Lagerkörper-Ringanordnungen 23, 24 auf. Lagerkörper-Ringanordnungen 23, 24 sind zwischen dem Innen-Lagerring-Oberteil 15 und dem Außen-Lagerring 7 an den Laufflächen 33, 34 angeordnet. Die Drehverbindung 57 ist vierreihig.

Zwischen dem Innen-Lagerring-Unterteil 16 und dem Außen-Lagerring 7 ist genau eine Lagerkörper-Ringanordnung 58 und insbesondere nicht eine gestufte Anordnung mehrerer Lagerkörper-Ringanordnungen vorgesehen. Die Drehverbindung 57 weist insgesamt 4 Lagerkörper-Ringanordnungen 23, 24, 25, 58 auf.

Das bedeutet, dass bei der Drehverbindung 57 nur das Innen-Lagerring-Oberteil 15 gestuft, also zur Aufnahme von zwei korrespondierenden Lagerkörper-Ringanordnungen 23, 24 ausgeführt ist. Entsprechend ist der Außen-Lagerring 7 an einer dem Innen-Lagerring-Oberteil 15 zugewandten Oberseite ebenfalls gestuft ausgeführt. Das Innen-Lagerring-Unterteil 16 und eine dem Innen-Lagerring-Unterteil 16 zugewandte Unterseite des Außen-Lagerrings 7 sind konventionell, also ungestuft zur Aufnahme einer einzigen Lagerkörper-Ringanordnung 58 ausgeführt. Es ist möglich, das Innen-Lagerring-Unterteil 16 beispielsweise von einer bestehenden Drehverbindung zu übernehmen oder zumindest gleichartig auszuführen, so dass die Teileanzahl für die Drehverbindung 57 reduziert ist. Dadurch ergibt sich ein zusätzlicher Kostenvorteil.

Die Lagerkörper-Ringanordnungen 23, 24 haben identische Wirkrichtungen wie die Lagerkörper-Ringanordnungen 23, 24 in dem Ausführungsbeispiel gemäß Fig. 2.

## Patentansprüche

1. Drehverbindung (4; 44; 50; 57) für eine Arbeitsmaschine (1), insbesondere für einen Kran, mit
a. einer Drehachse (5),
b. einem Innen-Lagerring (6),
c. einem Außen-Lagerring (7) und
d. mindestens drei zwischen den Lagerringen (6, 7) angeordneten Lagerkörper-Ringanordnungen (23, 24, 25, 26, 27; 45, 46, 47, 48; 25, 51, 52, 53, 54; 23, 24, 25, 58) mit jeweils mehreren Lagerkörpern (28, 29, 30; 30, 49; 29, 55, 56; 28, 29, 30),
- wobei mindestens eine der Lagerkörper-Ringanordnungen (25; 45, 46, 47, 48; 25; 25) zur Aufnahme von in radialer Richtung (37) zur Drehachse (5) gerichteten Kräften ausgeführt ist, wobei die mindestens eine Lagerkörper-Ringanordnung (25) eine Mittenfläche aufweist, die als eine konzentrisch zur Drehachse (5) orientierte Zylindermantelfläche ausgeführt ist,
- wobei mindestens zwei der Lagerkörper-Ringanordnungen (23, 24; 26, 27; 45, 46; 47, 48; 51, 52; 53, 54; 23, 24)
-- zur Aufnahme von parallel zur Drehachse (5) gerichteten Kräften ausgeführt sind,
-- entlang der Drehachse (5) benachbart zueinander angeordnet sind und
-- entlang der Drehachse (5) beabstandet zueinander angeordnet sind,
- wobei die mindestens zwei zur Aufnahme von parallel zur Drehachse (5) gerichteten Kräften aufgeführten Lagerkörper-Ringanordnungen (23, 24; 26, 27; 45, 46; 47, 48; 51, 52; 53, 54; 23, 24) jeweils eine Wirkrichtung (59, 60; 61, 62; 63, 64; 65, 66; 59, 60; 61, 62; 59, 60) festlegen und entlang der Wirkrichtung (59, 60; 61, 62; 63, 64; 65, 66; 59, 60; 61, 62; 59, 60) beabstandet zueinander angeordnet sind,
- wobei die Wirkrichtungen (59, 60; 61, 62; 63, 64; 65, 66; 59, 60; 61, 62; 59, 60) parallel zur Drehachse (5) orientiert sind.

2. Drehverbindung (4; 44; 50; 57) nach Anspruch 1, **gekennzeichnet durch** mindestens vier Lagerkörper-Ringanordnungen (23, 24, 25, 26, 27; 45, 46, 47, 48; 25, 51, 52, 53, 54; 23, 24, 25, 58), wobei die zur zumindest teilweisen Aufnahme von in radialer Richtung (37) zur Drehachse (5) gerichteten Kräften dienende Lagerkörper-Ringanordnung (25; 45, 46, 47, 48; 25; 25) entlang der Drehachse (5) zwischen mindestens einer zur zumindest teilweisen Aufnahme von parallel zur Drehachse (5) gerichteten Kräften dienende Lagerkörper-Ringanordnung (23, 24; 45, 46; 51, 52; 58) und zwei weiteren benachbart und beabstandet zueinander angeordneten, zur zumindest teilweisen Aufnahme von parallel zur Drehachse (5) gerichteten Kräften dienenden Lagerkörper-Ringanordnungen (23, 24; 45, 46; 51, 52; 23, 24) angeordnet ist.

3. Drehverbindung (4; 44; 50) nach einem der vorstehenden Ansprüche, **gekennzeichnet durch** mindestens vier, insbesondere fünf, Lagerkörper-Ringanordnungen (23, 24, 25, 26, 27; 45, 46, 47, 48; 25, 51, 52, 53, 54), die zwei Zug-Lagerkörper-Ringanordnungen (23, 24; 45, 46; 51, 52) und zwei Druck-Lagerkörper-Ringanordnungen (26, 27; 47, 48; 53, 54) aufweisen.

4. Drehverbindung (4; 44; 50; 57) nach einem der vorstehenden Ansprüche, **dadurch gekennzeichnet, dass** der Innen-Lagerring (6) mindestens zwei Innen-Lagerring-Zug-Laufflächen (33) und mindestens zwei Innen-Lagerring-Druck-Laufflächen (41) und der Außen-Lagerring (7) mindestens zwei Außen-Lagerring-Zug-Laufflächen (34) und mindestens zwei Außen-Lagerring-Druck-Laufflächen (42) aufweisen, wobei mindestens eine Lagerkörper-Ringanordnung (23, 24; 45, 46; 51, 52; 23, 24) zwischen einer der Innen-Lagerring-Zug-Laufflächen (33) und einer der Außen-Lagerring-Zug-Laufflächen (34) bzw. mindestens eine Lagerkörper-Ringanordnung (26, 27; 47, 48; 53, 54; 58) zwischen einer der Innen-Lagerring-Druck-Laufflächen (41) und einer der Außen-Lagerring-Druck-Laufflächen (42) angeordnet ist.

5. Drehverbindung (4; 44; 50; 57) nach einem der vorstehenden Ansprüche, **dadurch gekennzeichnet, dass** die mindestens zwei entlang der Drehachse (5) beabstandet angeordneten Lagerkörper-Ringanordnungen (23, 24; 26, 27; 45, 46; 47, 48; 51, 52; 53, 54) in der bezüglich der Drehachse (5) radialen Richtung (37) beabstandet angeordnet sind.

6. Drehverbindung (4; 44; 50; 57) nach einem der vorstehenden Ansprüche, **dadurch gekennzeichnet, dass** einer der Lagerringe, insbesondere der Innen-Lagerring (6), zweiteilig ausgeführt ist, insbesondere mit einem Innen-Lagerring-Oberteil (15) und einem Innen-Lagerring-Unterteil (16), und eine Trennfläche (17) aufweist, die quer und insbesondere senkrecht zur Drehachse (5) orientiert ist.

7. Drehverbindung (4; 44; 50; 57) nach einem der vorstehenden Ansprüche, **dadurch gekennzeichnet, dass** einer der Lagerringe, insbesondere der Außen-Lagerring (7), einen inneren Stufenabschnitt (21) mit einer ersten Höhe (h₁) entlang der Drehachse (5) und einen äußeren Stufenabschnitt (22) mit einer zweiten Höhe (h₂) entlang der Drehachse (5) aufweist, wobei gilt h₁ < h₂.

8. Drehverbindung (4; 44; 50; 57) nach einem der vorstehenden Ansprüche, **dadurch gekennzeichnet, dass** mindestens zwei der Lagerkörper-Ringanordnungen (23, 24, 26, 27; 45, 46, 47, 48; 51, 52, 53, 54; 23, 24, 58) jeweils eine Mittenfläche aufweisen, die quer und insbesondere senkrecht zur Drehachse (5) orientiert ist.

9. Drehverbindung (4; 44; 57) nach einem der vorstehenden Ansprüche, **gekennzeichnet durch** Wälzkörper (28, 29, 30) als Lagerkörper, insbesondere in Form von zylindrischen Rollen, Kegelrollen, Nadeln, Tonnen und/oder Kugeln.

10. Drehverbindung (50) nach einem der Ansprüche 1 bis 8, **gekennzeichnet durch** Gleitkörper (55, 56) als Lagerkörper, insbesondere in Form von Gleitpaarungen und/oder Gleitbahnen.

11. Drehverbindung (4; 44; 50; 57) nach einem der vorstehenden Ansprüche, **dadurch gekennzeichnet, dass** Laufflächen (33, 34, 41, 42) für die Lagerkörper (28, 29, 30; 30, 49; 29, 55, 56; 28, 29, 30) einstückig an den Lagerringen (6, 7) ausgebildet sind.

12. Drehverbindung (4; 44; 50; 57) nach Anspruch 11, **dadurch gekennzeichnet, dass** die Lagerkörper (28, 29, 30; 30, 49; 29, 55, 56; 28, 29, 30) direkt auf einer korrespondierenden Lauffläche (33, 34, 41, 42) der Lagerringe (6, 7) angeordnet sind.

13. Drehverbindung (4; 50; 57) nach einem der vorstehenden Ansprüche, **dadurch gekennzeichnet, dass** eine entlang der Drehachse (5) orientierte Bauhöhe der Drehverbindung (4; 50; 57) reduziert ist, indem anstelle einer einzigen Lagerkörper-Ringanordnung mit Lagerkörpern mindestens zwei Lagerkörper-Ringanordnungen (23, 24, 25, 26, 27; 45, 46, 47, 48; 25, 51, 52, 53, 54; 23, 24, 25, 58) mit Lagerkörpern (28, 29, 30; 30, 49; 29, 55, 56; 28, 29, 30) verwendet werden, die jeweils kleiner sind als die Lagerkörper der einzigen Lagerkörper-Ringanordnung.

14. Drehverbindung (4; 50; 57) nach Anspruch 13, **dadurch gekennzeichnet, dass** die Bauhöhe des Innen-Lagerrings (6) und/oder des Außen-Lagerrings (7) reduziert ist.

15. Drehverbindung (4; 50; 57) nach Anspruch 13 oder 14, **dadurch gekennzeichnet, dass** eine Gesamthöhe (h_{ges}) der Drehverbindung (4; 50; 57) um mehr als 20% gegenüber einer konventionellen Drehverbindung mit identischer Tragfähigkeit reduziert ist.

## Claims

1. Rotary connection (4; 44; 50; 57) for a work machine (1), in particular for a crane, with
a. a rotational axis (5),
b. an inner bearing ring (6),
c. an outer bearing ring (7) and
d. at least three bearing body ring arrangements (23, 24, 25, 26, 27; 45, 46, 47, 48; 25, 51, 52, 53, 54; 23, 24, 25, 58) arranged between the bearing rings (6, 7), each bearing body ring arrangement (23, 24, 25, 26, 27; 45, 46, 47, 48; 25, 51, 52, 53, 54; 23, 24, 25, 58) comprising a plurality of respective bearing bodies (28, 29, 30; 30, 49; 29, 55, 56; 28, 29, 30),
- wherein at least one of the bearing body ring arrangements (25; 45, 46, 47, 48; 25; 25) is configured to withstand forces directed in the radial direction (37) to the rotational axis (5), wherein the at least one bearing body ring arrangement (25) has a centre face which is configured as a cylinder lateral surface oriented concentrically with respect to the rotational axis (5),
- wherein at least two of the bearing body ring arrangements (23, 24; 26, 27; 45, 46; 47, 48; 51, 52; 53, 54; 23, 24)
-- are configured to withstand forces directed parallel to the rotational axis (5),
-- are arranged adjacent to one another along the rotational axis (5) and
-- are arranged spaced apart from one another along the rotational axis (5),
- wherein the at least two bearing body ring arrangements (23, 24; 26, 27; 45, 46; 47, 48; 51, 52; 53, 54; 23, 24) configured to withstand forces directed parallel to the rotational axis (5) in each case establish a direction (59, 60; 61, 62; 63, 64; 65, 66; 59, 60; 61, 62; 59, 60) of action and are arranged spaced apart from one another along the direction (59, 60; 61, 62; 63, 64; 65, 66; 59, 60; 61, 62; 59, 60) of action,
- wherein the directions (59, 60; 61, 62; 63, 64; 65, 66; 59, 60; 61, 62; 59, 60) of action are oriented parallel to the rotational axis (5).

2. Rotary connection (4; 44; 50; 57) according to claim 1, **characterised by** at least four bearing body ring arrangements (23, 24, 25, 26, 27; 45, 46, 47, 48; 25, 51, 52, 53, 54; 23, 24, 25, 58), wherein the bearing body ring arrangement (25; 45, 46, 47, 48; 25; 25) being used to at least partially withstand forces directed in the radial direction (37) to the rotational axis (5) is arranged along the rotational axis (5) between at least one bearing body ring arrangement (23, 24; 45, 46; 51, 52; 58) being used to at least partially withstand forces directed parallel to the rotational axis (5) and two further bearing body ring arrangements (23, 24; 45, 46; 51, 52; 23, 24) arranged adjacently and spaced apart from one another and being used to at least partially withstand forces directed parallel to the rotational axis (5).

3. Rotary connection (4; 44; 50) according to any one of the preceding claims, **characterised by** at least four, in particular five, bearing body ring arrangements (23, 24, 25, 26, 27; 45, 46, 47, 48; 25, 51, 52, 53, 54), which have two tensile bearing body ring arrangements (23, 24; 45, 46; 51, 52) and two compression bearing body ring arrangements (26, 27; 47, 48; 53, 54).

4. Rotary connection (4; 44; 50; 57) according to any one of the preceding claims, **characterised in that** the inner bearing ring (6) has at least two inner bearing ring tensile running surfaces (33) and at least two inner bearing ring compression running surfaces (41) and the outer bearing ring (7) has at least two outer bearing ring tensile running surfaces (34) and at least two outer bearing ring compression running surfaces (42), wherein at least one bearing body ring arrangement (23, 24; 45, 46; 51, 52; 23, 24) is arranged between one of the inner bearing ring tensile running surfaces (33) and one of the outer bearing ring tensile running surfaces (34) or at least one bearing body ring arrangement (26, 27; 47, 48; 53, 54; 58) is arranged between one of the inner bearing ring compression running surfaces (41) and one of the outer bearing ring compression running surfaces (42).

5. Rotary connection (4; 44; 50; 57) according to any one of the preceding claims, **characterised in that** the at least two bearing body ring arrangements (23, 24; 26, 27; 45, 46; 47, 48; 51, 52; 53, 54) arranged spaced apart along the rotational axis (5) are arranged spaced apart in the radial direction (37) with respect to the rotational axis (5).

6. Rotary connection (4; 44; 50; 57) according to any one of the preceding claims, **characterised in that** one of the bearing rings, in particular the inner bearing ring (6), is configured in two parts, in particular with an inner bearing ring upper part (15) and an inner bearing ring lower part (16), and has a dividing face (17), which is oriented transversely and in particular perpendicularly to the rotational axis (5).

7. Rotary connection (4; 44; 50; 57) according to any one of the preceding claims, **characterised in that** one of the bearing rings, in particular the outer bearing ring (7), has an inner step portion (21) with a first height (h₁) along the rotational axis (5) and an outer step portion (22) with a second height (h₂) along the rotational axis (5), wherein there applies h₁ < h₂.

8. Rotary connection (4; 44; 50; 57) according to any one of the preceding claims, **characterised in that** at least two of the bearing body ring arrangements (23, 24, 26, 27; 45, 46, 47, 48; 51, 52, 53, 54; 23, 24, 58) in each case have a centre face, which is oriented transversely, and in particular perpendicularly, to the rotational axis (5).

9. Rotary connection (4; 44; 57) according to any one of the preceding claims, **characterised by** rolling bodies (28, 29, 30) as bearing bodies, in particular in the form of cylindrical rollers, tapered rollers, needles, barrels and/or balls.

10. Rotary connection (50) according to any one of claims 1 to 8, **characterised by** sliding bodies (55, 56) as bearing bodies, in particular in the form of sliding pairings and/or sliding paths.

11. Rotary connection (4; 44; 50; 57) according to any one of the preceding claims, **characterised in that** running surfaces (33, 34, 41, 42) for the bearing bodies (28, 29, 30; 30, 49; 29, 55, 56; 28, 29, 30) are configured in one piece on the bearing rings (6, 7).

12. Rotary connection (4; 44; 50; 57) according to claim 11, **characterised in that** the bearing bodies (28, 29, 30; 30, 49; 29, 55, 56; 28, 29, 30) are arranged directly on a corresponding running surface (33, 34, 41, 42) of the bearing rings (6, 7).

13. Rotary connection (4; 50; 57) according to any one of the preceding claims, **characterised in that** a height, oriented along the rotational axis (5), of the rotary connection (4; 50; 57) is reduced in such a way that instead of a single bearing body ring arrangement comprising bearing bodies, at least two bearing body ring arrangements (23, 24, 25, 26, 27; 45, 46, 47, 48; 25, 51, 52, 53, 54; 23, 24, 25, 28) comprising bearing bodies (28, 29, 30; 30, 49; 29, 55, 56; 28, 29, 30) are used which are in each case smaller than the bearing bodies of the single bearing body ring arrangement.

14. Rotary connection (4; 50; 57) according to claim 13, **characterised in that** the height of the inner bearing ring (6) and/or of the outer bearing ring (7) is reduced.

15. Rotary connection (4; 50; 57) according to claim 13 or 14, **characterised in that** a total height (hₜₒₜₐₗ) of the rotary connection (4; 50; 57) is reduced by more than 20% compared to a conventional rotary connection having an identical bearing capacity.

## Revendications

1. Liaison tournante (4 ; 44 ; 50 ; 57) pour un engin de travail (1), notamment pour une grue, comprenant
a. un axe de rotation (5),
b. une bague de palier intérieure (6),
c. une bague de palier extérieure (7) et
d. au moins trois ensembles de bagues de corps de palier (23, 24, 25, 26, 27 ; 45, 46, 47, 48 ; 25, 51, 52, 53, 54 ; 23, 24, 25, 58) disposés entre les bagues de palier (6, 7) dotés, chacun, de plusieurs corps de palier (28, 29, 30 ; 30, 49 ; 29, 55, 56 ; 28, 29, 30),
- où au moins l'un des ensembles de bagues de corps de palier (25 ; 45, 46, 47, 48 ; 25 ; 25) est conçu pour l'admission de forces orientées en direction radiale (37) par rapport à l'axe de rotation (5), au moins un ensemble de bagues de corps de palier (25) présente une surface centrale qui est conçue sous la forme d'une surface d'enveloppe d'un cylindre concentrique à l'axe de rotation (5),
- où au moins deux ensembles de bagues de corps de palier (23, 24 ; 26, 27 ; 45, 46 ; 47, 48 ; 51, 52 ; 53, 54 ; 23, 24)
-- sont conçus pour l'admission de forces orientées parallèlement par rapport à l'axe de rotation (5),
-- sont disposés au voisinage l'un de l'autre le long de l'axe de rotation (5), et
-- sont disposés espacés l'un de l'autre le long de l'axe de rotation (5),
- où au moins deux ensembles de bagues de corps de palier (23, 24 ; 26, 27 ; 45, 46 ; 47, 48 ; 51, 52 ; 53, 54 ; 23, 24) conçus pour l'admission de forces orientées parallèlement par rapport à l'axe de rotation (5) déterminent chacun une direction effective (59, 60 ; 61, 62 ; 63, 64 ; 65, 66 ; 59, 60 ; 61, 62 ; 59, 60) et sont disposés espacés l'un de l'autre le long de la direction effective (59, 60 ; 61, 62 ; 63, 64 ; 65, 66 ; 59, 60 ; 61, 62 ; 59, 60),
- où les directions effectives (59, 60 ; 61, 62 ; 63, 64 ; 65, 66 ; 59, 60 ; 61, 62 ; 59, 60) sont orientées parallèlement par rapport à l'axe de rotation (5).

2. Liaison tournante (4 ; 44 ; 50 ; 57) selon la revendication 1, **caractérisée par** au moins quatre ensembles de bagues de corps de palier (23, 24, 25, 26, 27 ; 45, 46, 47, 48 ; 25, 51, 52, 53, 54 ; 23, 24, 25, 58), où l'ensemble de bagues de corps de palier (25 ; 45, 46, 47, 48 ; 25 ; 25) servant à la réception au moins partielle des forces orientées en direction radiale (37) par rapport à l'axe de rotation (5) est disposé le long de l'axe de rotation (5) entre au moins un ensemble de bagues de corps de palier (23, 24 ; 45, 46 ; 51, 52 ; 58) servant à la réception au moins partielle des forces orientées parallèlement par rapport à l'axe de rotation (5) et deux autres ensembles de bagues de corps de palier (23, 24 ; 45, 46 ; 51, 52 ; 23, 24), voisins et disposés espacés l'un par rapport à l'autre, servant à la réception au moins partielle des forces orientées parallèlement par rapport à l'axe de rotation (5).

3. Liaison tournante (4 ; 44 ; 50) selon l'une des revendications précédentes, **caractérisée par** au moins quatre, notamment cinq, ensembles de bagues de corps de palier (23, 24, 25, 26, 27 ; 45, 46, 47, 48 ; 25, 51, 52, 53, 54) qui présentent deux ensembles de bagues de corps de palier de traction (23, 24 ; 45, 46 ; 51, 52) et deux ensembles de bagues de corps de palier de compression (26, 27 ; 47, 48 ; 53, 54).

4. Liaison tournante (4 ; 44 ; 50 ; 57) selon l'une des revendications précédentes, **caractérisée en ce que** la bague de palier intérieure (6) présente au moins deux bandes de roulement de traction (33) de bague de palier intérieure et au moins deux bandes de roulement de compression (41) de bague de palier intérieure et que la bague de palier extérieure (7) présente au moins deux bandes de roulement de traction (34) de bague de palier extérieure et au moins deux bandes de roulement de compression (42) de bague de palier extérieure, où au moins un ensemble de bagues de corps de palier (23, 24 ; 45, 46 ; 51, 52 ; 23, 24) est disposé entre l'une des bandes de roulement de traction (33) de la bague de palier intérieure et l'une des bandes de roulement de traction (34) de la bague de palier extérieure, respectivement, au moins un ensemble de bagues de corps de palier (26, 27 ; 47, 48 ; 53, 54 ; 58) est disposé entre l'une des bandes de roulement de compression (41) de la bague de palier intérieure et l'une des bandes de roulement de compression (42) de la bague de palier extérieure.

5. Liaison tournante (4 ; 44 ; 50 ; 57) selon l'une des revendications précédentes, caractérisée en ce **qu**'au moins les deux ensembles de bagues de corps de palier (23, 24 ; 26, 27 ; 45, 46 ; 47, 48 ; 51, 52 ; 53, 54) disposés espacés le long de l'axe de rotation (5) sont disposés espacés dans la direction radiale (37) par rapport à l'axe de rotation (5).

6. Liaison tournante (4 ; 44 ; 50 ; 57) selon l'une des revendications précédentes, **caractérisée en ce que** l'une des bague de palier, notamment, la bague de palier intérieure (6), est conçue en deux parties, en particulier avec une partie supérieure de bague de palier intérieure (15) et une partie inférieure de bague de palier intérieure (16), et présente une surface de séparation (17) qui est orientée perpendiculairement, et notamment verticalement, par rapport à l'axe de rotation (5).

7. Liaison tournante (4 ; 44 ; 50 ; 57) selon l'une des revendications précédentes, **caractérisée en ce qu'**une des bagues de palier, notamment, la bague de palier extérieure (7), présente une section étagée intérieure (21) avec une première hauteur (h₁) le long de l'axe de rotation (5) et une section étagée extérieure (22) avec une deuxième hauteur (h₂) le long de l'axe de rotation (5), où l'on a h₁ < h₂.

8. Liaison tournante (4 ; 44 ; 50 ; 57) selon l'une des revendications précédentes, caractérisée en ce **qu**'au moins deux parmi les ensembles de bagues de corps de palier (23, 24, 26, 27 ; 45, 46, 47, 48 ; 51, 52, 53, 54 ; 23, 24, 58) présentent chacun une surface centrale qui est orientée perpendiculairement, et notamment verticalement, par rapport à l'axe de rotation (5).

9. Liaison tournante (4 ; 44 ; 57) selon l'une des revendications précédentes, **caractérisée par** des corps roulants (28, 29, 30) servant de corps de palier, en particulier, sous la forme de rouleaux cylindriques, de rouleaux coniques, d'aiguilles, de tonneaux et/ou de billes.

10. Liaison tournante (50) selon l'une des revendications 1 à 8, **caractérisée par** des corps coulissants (55, 56) servant de corps de palier, en particulier, sous la forme de systèmes d'association coulissante et/ou de bandes coulissantes.

11. Liaison tournante (4 ; 44 ; 50 ; 57) selon l'une des revendications précédentes, **caractérisée en ce que** les bandes de roulement (33, 34, 41, 42) pour les corps de palier (28, 29, 30 ; 30, 49 ; 29, 55, 56 ; 28, 29, 30) sont conçus sous forme d'une seule pièce sur les bagues de palier (6, 7).

12. Liaison tournante (4 ; 44 ; 50 ; 57) selon la revendication 11, **caractérisée en ce que** les corps de palier (28, 29, 30 ; 30, 49 ; 29, 55, 56 ; 28, 29, 30) sont disposés directement sur une bande de roulement (33, 34, 41, 42) correspondante des bagues de palier (6, 7).

13. Liaison tournante (4 ; 50 ; 57) selon l'une des revendications précédentes, **caractérisée en ce qu'**une hauteur de construction de la liaison tournante (4 ; 50 ; 57), orientée le long de l'axe de rotation (5), est réduite dans la mesure où, à la place d'un ensemble de bagues de corps de palier unique avec des corps de palier, au moins deux ensembles de bagues de corps de palier (23, 24, 25, 26, 27 ; 45, 46, 47, 48 ; 25, 51, 52, 53, 54 ; 23, 24, 25, 58) avec des corps de palier (28, 29, 30 ; 30, 49 ; 29, 55, 56 ; 28, 29, 30) sont employés, qui sont, chacun, plus petits que les corps de palier de l'ensemble de bagues de corps de palier unique.

14. Liaison tournante (4 ; 50 ; 57) selon la revendication 13, **caractérisée en ce que** la hauteur de construction de la bague de palier intérieure (6) et/ou de la bague de palier extérieure (7) est réduite.

15. Liaison tournante (4 ; 50 ; 57) selon les revendications 13 ou 14, **caractérisée en ce qu'**une hauteur totale (hₜₒₜ) de la liaison tournante (4 ; 50 ; 57) est réduite de plus de 20 % par rapport à une liaison tournante conventionnelle avec une capacité de charge identique.
